# EUROPÄISCHE PATENTANMELDUNG

(11) **EP 2 463 813 A2**
(43) Veröffentlichungstag der Anmeldung: **13.06.2012**
(21) Anmeldenummer: 11009078.4
(22) Anmeldetag: 15.11.2011
(51) Int. Cl.: G06Q 10/06, E04G 1/00, G01C 11/00, G01C 15/00, G01S 17/00

(54) **Vorrichtung, System und Verfahren zur Untersuchung von Gerüsten**

(30) Priorität: 09.12.2010 DE 102010053914
(71) Anmelder: Bilfinger Berger Industrial Services GmbH, 80992 München (DE)
(72) Erfinder: Stöhr, Harald, 82205 Gilching (DE); Jürcke, Rudolf, Dr.-Ing., 57234 Wilnsdorf (DE)
(74) Vertreter: Schlotter, Alexander Carolus Paul

(57) **Zusammenfassung**

Die Erfindung betrifft eine Vorrichtung, ein System sowie ein entsprechendes Verfahren zur Untersuchung einer vorhandenen Gruppe von, insbesondere zu einem Gerüst (10) miteinander verbundenen, Gerüstbauelementen (11 - 15).

Zur zeitsparenden und zuverlässigen Untersuchung der Gerüstbauelemente (11 - 15) bzw. des Gerüstes (10) ist mindestens eine Erfassungseinrichtung (20 - 23) zur Erfassung der Gruppe der Gerüstbauelemente (11 - 15) und eine Verarbeitungseinrichtung (30) zur zumindest teilweise automatisierten Ermittlung von zumindest einer Eigenschaft (32) der Gruppe der Gerüstbauelemente (11 - 15), insbesondere einer Anzahl und/oder Anordnung von Gerüstbauelementen (11 - 15), aus der erfassten Gruppe der Gerüstbauelemente (11 - 15) vorgesehen.

## Beschreibung

Die vorliegende Erfindung betrifft eine Vorrichtung, ein System sowie ein entsprechendes Verfahren zur Untersuchung von Gerüsten gemäß dem Oberbegriff des Anspruchs 1, 14 bzw. 15.

Gerüste finden beispielsweise in Form von Arbeits-, Fang-, Schutz- und Schalungsgerüsten auf Baustellen sowie in Industrieanlagen eine vielseitige Verwendung. Im Gerüstbau in Industriebranchen, wie zum Beispiel in der Chemie, Petrochemie und Energiewirtschaft, kommen unter anderem Raum-, Universal- und Fassadengerüste zum Einsatz, mit deren Hilfe beispielsweise Revisionen in Kraftwerken und Wartungs- oder Umbauarbeiten von Großanlagen durchgeführt werden können. Neben Gerüstbauern, die vorwiegend gängige Gerüstarten anbieten, gibt es Unternehmen, die auf den Spezial- und Ingenieursgerüstbau spezialisiert sind und dort beispielsweise Spezialgerüste für Brücken, Schornsteine und Kassettendächer planen und erstellen.

Aufgrund ihrer oft sehr komplexen Struktur können bestimmte Eigenschaften von real aufgebauten Gerüsten, wie beispielsweise die Anzahl der bei einem Gerüst verwendeten Gerüstbauelemente oder die statischen Eigenschaften eines bereits aufgebauten Gerüstes, nur schwer ermittelt werden. Üblicherweise ist hierzu ein Abzählen und ggf. Feststellen der Anordnung der Gerüstbauelemente durch eine Person erforderlich, was einerseits zeit- und kostenintensiv ist und andererseits zu fehlerhaften Ergebnissen aufgrund von irrtümlicherweise falsch ermittelten oder notierten Zahlen führen kann.

Es ist Aufgabe der vorliegenden Erfindung, eine Vorrichtung, ein System sowie ein entsprechendes Verfahren anzugeben, welche bzw. welches eine zeitsparende und zuverlässige Untersuchung von Gerüsten ermöglicht.

Diese Aufgabe wird erfindungsgemäß durch die Vorrichtung, das System bzw. das Verfahren gemäß Anspruch 1, 14 bzw. 15 gelöst.

Eine erfindungsgemäße Vorrichtung weist eine oder mehrere Erfassungseinrichtungen zur Erfassung einer vorhandenen Gruppe von, insbesondere zu einem Gerüst miteinander verbundenen, Gerüstbauelementen sowie eine Verarbeitungseinrichtung zur vollständig oder teilweise automatisierten Ermittlung von einer oder mehreren Eigenschaften der Gruppe der Gerüstbauelemente, insbesondere einer Anzahl und/oder Anordnung von Gerüstbauelementen, aus der erfassten Gruppe der Gerüstbauelemente auf.

Ein erfindungsgemäßes System weist eine erfindungsgemäße Vorrichtung auf und ist außerdem gekennzeichnet durch Elemente, insbesondere elektromagnetische Strahlung reflektierende und/oder emittierende Elemente, insbesondere RFID-Elemente, die an den Gerüstbauelementen oder zumindest einem Teil der Gerüstbauelemente angebrachten sind und mit deren Hilfe die Gruppe der Gerüstbauelemente von der Erfassungseinrichtung erfasst oder deren Erfassung zumindest unterstützt werden kann.

Bei einem erfindungsgemäßen Verfahren wird die Gruppe der Gerüstbauelemente erfasst und daraus zumindest eine Eigenschaft der Gruppe der Gerüstbauelemente, insbesondere die Anzahl und/oder Anordnung der Gerüstbauelemente, zumindest teilweise automatisiert ermittelt.

Die Erfindung basiert auf dem Gedanken, eine Gruppe von, insbesondere zu einem Gerüst miteinander verbundenen Gerüstbauelementen, über eine vorzugsweise berührungslose Messmethode zu erfassen und daraus zumindest eine Eigenschaft des Gerüstes bzw. der Gerüstbauelemente automatisch zu ermitteln.

Ein Gerüstbauelement im Sinne der vorliegenden Erfindung kann insbesondere ein Stab, Balken, Träger, ein Platte, ein Verbindungselement wie beispielsweise eine Muffe, Überwurfmutter, ein Zwischenstück oder eine Verzweigung sein oder aufweisen. Bei der ermittelten Eigenschaft handelt es sich vorzugsweise um die Anzahl der erfassten Gerüstbauelemente und/oder deren Anordnung, das heißt deren relative Lage zueinander, im Gerüst. Die Anzahl kann vorzugsweise nach Art und/oder Anordnung der Gerüstbauelement klassifiziert oder gruppiert werden, So können beispielsweise alle Stäbe einer bestimmten Länge und/oder alle Platten in einem bestimmten Bereich ermittelt werden. Eine erfindungsgemäß ermittelte Anordnung kann vorzugsweise zwei- oder dreidimensional sein, wobei eine zweidimensionale Anordnung insbesondere Winkel von Projektionen von, vorzugsweise miteinander verbundenen, Gerüstbauelementen umfassen kann. Eine Eigenschaft kann auch eine statische, dynamische, optische, akustische und/oder thermodynamische Eigenschaft sein. So kann in einer bevorzugten Ausführung auf Basis einer ermittelten Gerüstbauelementeanzahl oder - anordnung beispielsweise ein Gewicht, eine Tragfähigkeit, eine Schwingungsantwort auf eine Anregung durch Wind- oder Erdbebenkräfte, ein Schattenwurf, eine Geräuschantwort auf eine Windanregung bzw. eine Temperaturverteilung oder -weiterleitung infolge von thermischen Einträgen wie Sonneneinstrahlung oder Wärmeleitung aus einem eingerüsteten Gebäude abgeschätzt oder bestimmt werden, vorzugsweise mittels einer Simulation, der ein Modell des Gerüstes zugrunde liegt, wobei Modellparameter wie insbesondere die Anzahl und/oder Anordnung einzelner oder aller Gerüstbauelemente erfindungsgemäß ermittelt wird. Hieraus wird deutlich, dass es vorteilhaft sein kann, jedoch nicht notwendig ist, alle Gerüstbauelemente in einem Bereich, beispielsweise einem Lagerplatz loser Gerüstbauelemente oder einem verbundenen Gerüst, zu erfassen. Es kann beispielsweise zur statischen Ermittlung, insbesondere Abschätzung, einer statischen Tragfähigkeit oder Bestimmtheit ausreichen, nur die Stäbe eines Gerüstes zu erfassen.

Aufgrund einer mittels berührungsloser Messtechniken bewerkstelligten Erfassung der Gerüstbauelemente in Verbindung mit der zumindest teilweise automatisierten Ermittlung der Eigenschaften des Gerüstes bzw. der Gerüstbauelemente können auf einfache, zeitsparende und zuverlässige Weise Aussagen über Eigenschaften des real aufgebauten Gerüstes bzw. der Gerüstbauelemente getroffen werden, insbesondere über die Anzahl der verwendeten Gerüstbauelemente und/oder deren Anordnung im Gerüst sowie über statische, dynamische oder aerodynamische Eigenschaften des Gerüstes.

Bei einer bevorzugten Ausführung der Erfindung ist die Erfassungseinrichtung zur Aufnahme eines oder mehrerer, insbesondere digitaler, Bilder der Gruppe der Gerüstbauelemente und die Verarbeitungseinrichtung zur Ermittlung der zumindest einen Eigenschaft der Gruppe der Gerüstbauelemente aus dem mindestens einen erfassten Bild ausgebildet. Durch die Erfassung eines Bildes der Gerüstbauelemente bzw. des Gerüstes kann vorteilhafterweise auf einfache und schnelle Weise eine hohe Dichte an Informationen als Grundlage für eine zuverlässige Ermittlung der Eigenschaften der Gerüstbauelemente bzw. des Gerüstes erhalten werden.

Vorzugsweise ist eine Aufnahme von mehreren Bildern der Gruppe der Gerüstbauelemente aus unterschiedlichen Positionen der Erfassungseinrichtung und/oder in unterschiedlichen Perspektiven und/oder zu unterschiedlichen Zeitpunkten vorgesehen bzw. die Erfassungseinrichtung hierzu ausgebildet. Hierdurch können bestimmte Eigenschaften der Gerüstbauelemente bzw. des Gerüstes, vorteilhafterweise mit noch höherer Zuverlässigkeit, ermittelt werden. Dies gilt insbesondere für die Bestimmung der Anzahl und/oder relativen Anordnung der Gerüstbauelemente sowie die zeitliche Veränderung dieser Eigenschaften beim Auf- oder Abbau eines Gerüstes.

Insbesondere ist eine Aufnahme einer Sequenz, d.h. einer zeitlichen Abfolge, von mehreren Bildern der Gruppe der Gerüstbauelemente vorgesehen bzw. die Erfassungseinrichtung hierzu ausgebildet. Bei der Sequenz kann es sich beispielsweise um eine Aufnahme der Gruppe der Gerüstbauelemente mit einer digitalen Videokamera handeln. Hierdurch wird eine schnelle und einfache Erfassung der Gerüstbauelemente bei gleichzeitig hoher Informationsdichte erreicht. Wenn die Videokamera während der Aufnahme zusätzlich bewegt wird, könne darüber hinaus die oben im Zusammenhang mit der Erfassung des Gerüstes aus unterschiedlichen Positionen bzw. Perspektiven erwähnten Voreile erzielt werden.

Vorzugsweise ist eine Erfassung der Gruppe der Gerüstbauelemente mittels elektromagnetischer Wellen, insbesondere sichtbarem Licht, Ultraviolett-, Infrarot-, Terahertz- oder Mikrowellenstrahlung, und/oder akustischer Wellen, insbesondere Ultraschall, vorgesehen bzw. die Erfassungseinrichtung hierzu ausgebildet.

Die Verwendung von elektromagnetischen Wellen hat den Vorteil, dass deren Erfassung durch kostengünstige, zuverlässige und vorzugsweise ortsauflösende Detektoren, wie z.B. Photodiodenarrays oder sog. CCDs ("Charge-coupled Devices") erfolgen kann. Durch die Wahl eines geeigneten Spektralbereichs kann die Erfassung der Gerüstbauelemente an die speziellen Gegebenheiten bei der Erfassung und/oder an die zu ermittelnden Eigenschaften angepasst werden. Beispielsweise kann bei Tage die Erfassung mittels sichtbaren Lichts erfolgen, während insbesondere in der Dämmerung oder bei Dunkelheit eine Erfassung mittels Infrarotstrahlung erfolgen kann. Letzteres kann beispielsweise auf Baustellen von Vorteil sein, bei denen ein Gerüst nachts auf- oder abgebaut wird oder unbemannt ist. Die Verwendung von Terahertzstrahlung, die auch in sog. Körperscannern eingesetzt wird, hat den besonderen Vorteil, dass bestimmte, z.B. metallische, Gerüstbestandteile besonders zuverlässig detektiert werden können, während andere Bestandteile, wie z.B. eine Verkleidung des Gerüsts aus Planen, nicht erfasst werden.

Auch die zusätzliche oder alternative Verwendung von akustischen Wellen zur Erfassung der Gerüstbauelemente hat besondere Vorteile. So lassen sich mit Hilfe akustischer Wellen auf einfache und zuverlässige Weise Entfernungen zwischen der Erfassungseinrichtung und den Gerüstbauelementen und - daraus abgeleitet - auch zwischen den Gerüstbauelementen bestimmen. Hieraus können dann auf besonders zuverlässige Weise Eigenschaften im Hinblick auf die Größe der Gerüstbauelemente bzw. des Gerüstes ermittelt werden. Im Falle der Verwendung von Ultraschall können kommerziell erhältliche Ultraschall-Entfernungsmesser verwendet werden.

Alternativ oder zusätzlich kann es auch von Vorteil sein, wenn die Erfassungseinrichtung zur Erfassung der Gruppe der Gerüstbauelemente durch Abtasten des Gerüstes mit einem akustischen und/oder elektromagnetischen Strahl, insbesondere einem Ultraschall-, Radar- oder Laserstrahl, ausgebildet ist. Das Abtasten mit einen Laserstrahl stellt eine besonders genaue Erfassung der Gerüstbauelemente dar und ermöglicht eine entsprechend zuverlässige Ermittlung deren Eigenschaften.

Vorzugsweise ist die Verarbeitungseinrichtung zur Ermittlung aerodynamischer und/oder mechanischer, insbesondere statischer und/oder dynamischer, Eigenschaften der Gruppe der Gerüstbauelemente aus der erfassten Gruppe der Gerüstbauelemente ausgebildet. Damit werden nicht nur Informationen zur Anzahl der erfassten Gerüstbauelemente bzw. zu deren Anordnung erhalten, sondern es können auch Aussagen über die Stabilität des Gerüstes getroffen werden, um beispielsweise nach dessen Aufbau zu kontrollieren, ob dieses die für den jeweiligen Zweck erforderlichen statischen oder dynamischen Eigenschaften aufweist. Entsprechendes gilt hinsichtlich aerodynamischer Eigenschaften, insbesondere bei Gerüsten in großer Höhe und/oder in einer Umgebung mit starkem Wind.

Bei einer weiteren bevorzugten Ausgestaltung ist die Verarbeitungseinrichtung derart ausgebildet, dass zumindest eine aus der erfassten Gruppe der Gerüstbauelemente ermittelte Eigenschaft mit vorgegebenen Informationen, welche insbesondere einer Inventarliste entnommen werden, verglichen wird und/oder in eine Datenbank und/oder ein Dokument, insbesondere in eine Inventarliste, eingetragen wird. Im einfachsten Fall handelt es sich bei der Eigenschaft um eine Anzahl (Ist-Wert) von in einem Gerüst oder Stapel befindlichen Gerüstbauelementen, insbesondere eines bestimmten Typs, die mit einem in einer Inventarliste abgelegten Sollwert verglichen wird. Auf diese Weise kann einfach überprüft werden, ob noch alle auf einer Baustelle ursprünglich eingesetzten Gerüstbauelemente vorhanden sind bzw. ob die für einen bevorstehenden Aufbau eines Gerüstes erforderlichen Gerüstbauelemente bereits geliefert wurden. Alternativ oder zusätzlich ist es möglich, den ermittelten Ist-Wert - beispielsweise zu reinen Inventurzwecken - in eine Inventarliste einzutragen.

Vorteilhafterweise ist die Verarbeitungseinrichtung derart ausgebildet, dass das aufgenommene Bild einer Bildverarbeitung unterzogen wird, bevor daraus eine Eigenschaft der Gruppe der Gerüstbauelemente abgeleitet wird. Dadurch kann das Bild im Hinblick auf die nachfolgende Ableitung von Eigenschaften des Gerüstes bzw. der Gerüstbauelemente optimiert werden, was die Zuverlässigkeit bei der Ermittlung der Eigenschaften weiter verbessert.

Insbesondere ist die Verarbeitungseinrichtung zu einer Bildkorrektur des aufgenommenen Bildes ausgebildet, bei welcher Bildverzerrungen, insbesondere stürzende Linien, und/oder Schatteneffekte eliminiert oder zumindest reduziert werden. Bei stürzenden Linien handelt es sich um Linien oder Kanten im erfassten Bild, welche aufeinander zustreben, obwohl sie in Wirklichkeit parallel verlaufen, wie z.B. bei horizontal oder vertikal parallel verlaufenden Stangen oder Rahmen. Durch eine vorausgehende Reduktion oder Eliminierung von Bildverzerrungen bzw. Schatteneffekten wird eine besonders zuverlässige Ableitung der Eigenschaften der Gerüstbauelemente gewährleistet.

Vorzugsweise ist das aufgenommene Bild aus einer Vielzahl von Bildelementen zusammengesetzt und die Verarbeitungseinrichtung zu einer Segmentierung des aufgenommenen Bildes ausgebildet, bei welcher benachbarte Bildelemente zu inhaltlich zusammenhängenden Bereichen des Bildes zusammengefasst werden. Hierbei ist die Verarbeitungseinrichtung insbesondere derart ausgebildet, dass bei der Segmentierung Kanten oder Objektübergänge im aufgenommenen Bild erkannt werden und ein Kantenbild, in welchem die Kanten bzw. Objektübergänge gekennzeichnet sind, erzeugt wird. Durch diese Maßnahmen wird die Identifikation von zusammengehörigen Gerüstbauelementen, wie z.B. Stangen, Streben und Rahmen, auf einfache und zuverlässige Weise ermöglicht.

Bei der Segmentierung des erhaltenen Bildes bzw. der sog. Kantendetektion werden vorzugsweise sog. Kantenfilter eingesetzt, mittels welchen das aufgenommene Bild der Gruppe von Gerüstbauelementen gefiltert wird, indem es insbesondere einer diskreten Faltung unterzogen wird. Vorzugsweise werden als Kantenfilter folgende Operatoren, Filter bzw. Algorithmen verwendet: Sobel-, Scharr-, Prewitt-, Roberts-, Marr-Hildreth- oder Kirsch-Operator, Laplace-Filter, Canny-Algorithmus, Kontrastverstärker, Gradientensuchalgorithmus, Live-Wire-Verfahren oder Wasserscheidentransformation.

Es ist außerdem bevorzugt, dass bei der Ermittlung von zumindest einer Eigenschaft der Gruppe der Gerüstbauelemente ein Modell einzelner Gerüstbauelemente und/oder der Gruppe der Gerüstbauelemente, insbesondere des Gerüstes, berücksichtigt wird. Dadurch wird die Identifikation von Gerüstbauelementen noch zuverlässiger. Besonders bevorzugte Verfahren bei der Berücksichtigung des Modells sind die Hough-Transformation, statistische Modelle sowie die Segmentierung über Templates (sog. Template-Matching), bei welcher im erfassten Bild nach vorgegebenen Mustern gesucht wird.

Weitere Vorteile, Merkmale und Anwendungsmöglichkeiten der vorliegenden Erfindung ergeben sich aus der nachfolgenden Beschreibung im Zusammenhang mit den Figuren. Es zeigen:
- Fig. 1: eine schematische Darstellung eines Ausführungsbeispiels der Erfindung;
- Fig. 2.: eine schematische Darstellung eines Beispiels von an einem aufgenommenen Bild vorgenommenen Bildverarbeitungsschritten;
- Fig. 3: eine fotografische Ansicht eines typischerweise im Industriegerüstbau verwendeten Gerüstes;
- Fig. 4: einen Ausschnitt aus einem sogenannten Rahmengerüst; und
- Fig. 5.: einen Ausschnitt aus einem sogenannten Modulgerüst.

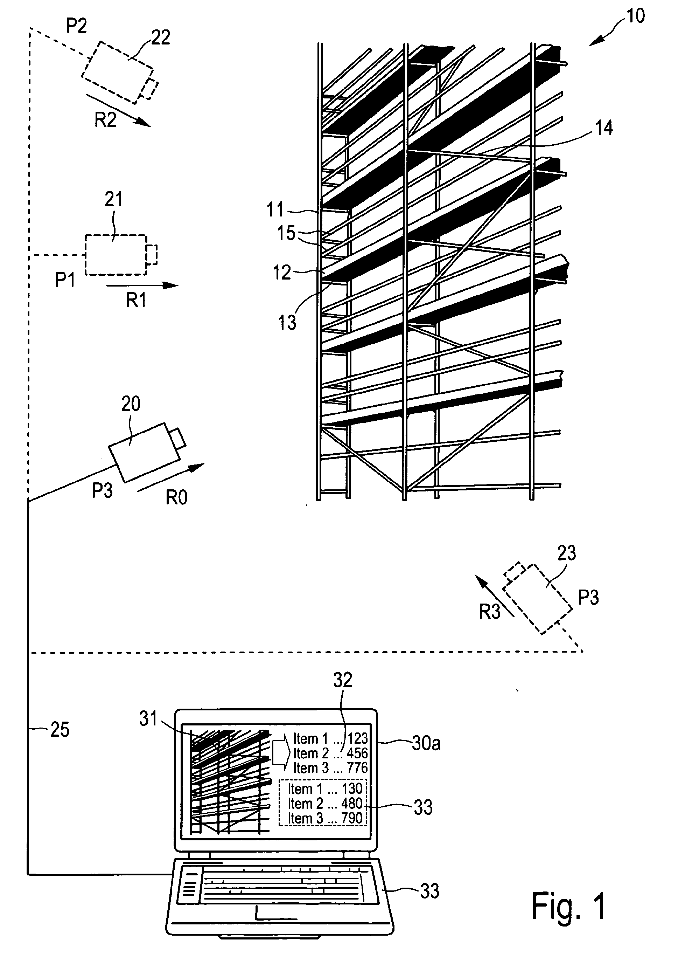

Fig. 1 zeigt eine stark schematisierte Darstellung eines Ausführungsbeispiels der Erfindung. Ein als sogenanntes Rahmengerüst ausgebildetes Gerüst 10 weist eine Vielzahl von im Wesentlichen vertikal verlaufenden Vertikalrahmen 11 und im Wesentlichen horizontal verlaufenden Horizontalrahmen 12 auf. Auf oder in die Horizontalrahmen 12 sind Böden 13 oder sogenannte Gerüstmatten gelegt, welche die Etagen des Gerüstes 10 bilden. Zwischen den Etagen verlaufen diagonale Streben 14, welche zur Stabilisierung des Gerüstes 10 in Längsrichtung beitragen. In der jeweils unteren Hälfte einer Etage ist ein im Wesentlichen zwei horizontal verlaufende Stangen aufweisendes Schutzgeländer 15 vorgesehen, welches auf dem Gerüst 10 arbeitende Personen vor dem Herabfallen schützt.

Eine Erfassungseinrichtung 20 befindet sich an einer Position P0 und ist in einer Richtung R0 auf das Gerüst gerichtet. Die Erfassungseinrichtung 20 ist zur berührungslosen Erfassung des Gerüstes 10 und/oder der jeweiligen Gerüstbauelemente 11 bis 15 ausgelegt, indem diese vom Gerüst 10 ausgehende elektromagnetische Strahlung, wie zum Beispiel sichtbares Licht, Ultraviolett-, Infrarot-, Terahertz- oder Mikrowellenstrahlung, erfasst. Alternativ oder zusätzlich kann die Erfassungseinrichtung 20 auch zur Erfassung von akustischen Wellen, insbesondere von Ultraschall, ausgebildet sein.

Die Erfassung der vom Gerüst 10 ausgehenden elektromagnetischen Strahlung bzw. akustischen Wellen erfolgt vorzugsweise durch einen in der Erfassungseinrichtung 20 befindlichen ortsauflösenden Detektor. Der Detektor umfasst hierbei vorzugsweise eine Vielzahl von in einer Linie oder Fläche angeordneten Detektorelementen, beispielsweise in Form eines, vorzugsweise zweidimensionalen, Photodiodenarrays (PDA) bzw. eines sogenannten Charge-coupled Device (CCD).

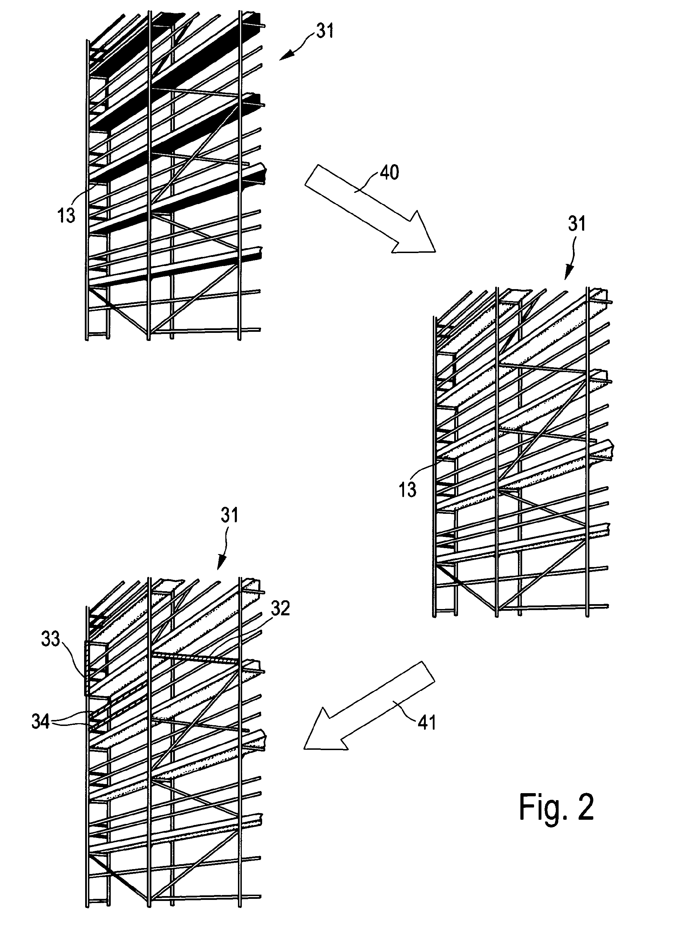

Auf diese Weise wird ein Bild 31 des Gerüstes 10 erhalten, wobei die erfasste elektromagnetische Strahlung bzw. die erfassten akustischen Wellen oder eine daraus abgeleitete Information über Helligkeitswerte und/oder Farbenortsaufgelöst visualisiert werden kann, beispielsweise auf einem Bildschirm 30a eines Computersystems 30, wie in Fig. 2 dargestellt.

Die Erfassungseinrichtung 20 ist im dargestellten Beispiel mittels eines Kabels 25 mit dem Computersystem 30 verbunden. Alternativ können sowohl in der Erfassungseinrichtung 20 als auch im Computersystem 30 entsprechende Schnittstellen vorgesehen sein, die eine drahtlose Übertragung von in der Erfassungseinrichtung 20 erzeugten Bilddaten zum Computersystem 30 ermöglichen.

Es können mehrere Bilder 31 des Gerüstes 10 aufgenommen werden, indem beispielsweise die Erfassungseinrichtung 20 in unterschiedliche Positionen P0 bis P3 gebracht und/oder in unterschiedliche Richtungen R0 bis R3 ausgerichtet wird, so dass Bilder 31 des Gerüstes 10 aus unterschiedlichen Perspektiven aufgenommen werden können. Hierbei ist es grundsätzlich möglich, nur eine Erfassungseinrichtung 20 zu verwenden. Je nach Anwendungsfall und Größe des zu untersuchenden Gerüstes 10 kann es jedoch von Vorteil sein, mehrere Bilder 31 des Gerüstes 10 unter Verwendung mehrerer Erfassungseinrichtungen 20 bis 23 aufzunehmen. Die zuletzt erwähnte Variante der Erfindung ist in Fig. 1 anhand von gestrichelten Linien veranschaulicht. Im Übrigen gelten für die Erfassungseinrichtungen 21 bis 23 die obenstehenden Erläuterungen zur Erfassungseinrichtung 20 entsprechend.

Alternativ oder zusätzlich können mit einer oder mehreren Erfassungseinrichtungen 20 bis 23 Bilder 31 zu unterschiedlichen Zeitpunkten erfasst werden. Bei fester Position P0 bis P3 und Orientierung R0 bis R3 der jeweiligen Erfassungseinrichtung 20 bis 23 kann auf diese Weise z.B. der Fortschritt beim Aufbau oder Abbau des Gerüstes 10 erfolgt werden.

Im Falle einer Aufnahme mehrerer Bilder 31 zu unterschiedlichen Zeitpunkten, insbesondere einer Sequenz von Bildern, bei gleichzeitig veränderlicher Position P0 und/oder Orientierung R0 der Erfassungseinrichtung 20 kann auf schnelle und bequeme Weise das Gerüst 10 bzw. die Gerüstbauelemente 11 bis 15 aus mehreren Perspektiven zuverlässig erfasst werden.

Im dargestellten Beispiel der Fig. 2 ist das Computersystem 30 als die erfindungsgemäße Verarbeitungseinrichtung ausgestaltet, welche aus dem vom Gerüst 10 aufgenommenen Bild 31 zumindest eine Eigenschaft 32 des Gerüstes automatisch ermitteln kann. Bei den Eigenschaften des Gerüstes 10 kann es sich beispielsweise um die Anzahl und/oder die Anordnung der Gerüstbauelemente 11 bis 15 des Gerüstes 10 relativ zueinander sowie um die statischen Eigenschaften des Gerüstes 10, beispielsweise eine Verteilung von statischen Kräften entlang der jeweiligen Gerüstbauelemente 10 bis 15, handeln.

Das Computersystem 30 ermöglicht es darüber hinaus, die aus dem Bild 31 abgeleiteten Eigenschaften 32 des Gerüstes 10 bzw. der Gerüstbauelemente 11 bis 15 auf dem Bildschirm 30a darzustellen und durch eine Gegenüberstellung mit vorgegebenen Informationen 33, die beispielsweise einer Inventarliste in Form einer Datenbank entnommen werden, einen Vergleich durchzuführen. Alternativ oder zusätzlich kann der Vergleich auch ohne eine visuelle Darstellung der abgeleiteten Eigenschaften 32 einerseits und der vorgegebenen Informationen 33 andererseits erfolgen, indem die entsprechenden Werte in einer Recheneinheit des Computersystems 30 miteinander verglichen werden und nur das Ergebnis dieses Vergleichs, z.B. auf dem Bildschirm 30a, ausgegeben wird.

Im Folgenden wird näher beschrieben, wie im Computersystem 30 Eigenschaften des Gerüstes 10 bzw. der Gerüstbauelemente 11 bis 15 aus dem aufgenommenen Bild 31 ermittelt werden.

Vorzugsweise wird das aufgenommene Bild 31 zunächst einer Bildverarbeitung unterzogen, welche insbesondere eine Korrektur des aufgenommenen Bildes 31 umfasst. Bei der Bildkorrektur können insbesondere eine durch die Bildaufnahme bedingte Bildverzerrung, wie zum Beispiel sogenannte stürzende Linien, und/oder Schatteneffekte korrigiert, das heißt eliminiert oder zumindest reduziert, werden.

Der Effekt einer Bildkorrektur 40 in Form einer Eliminierung von Schatteneffekten wird anhand des in Fig. 2 dargestellten Beispiels veranschaulicht. Während im oberen Teil der Fig. 2 im Bild 31 noch starke Schattenbereiche, insbesondere an der Unterseite der Böden 13 des Gerüstes, enthalten sind, sind diese nach erfolgter Bildkorrektur 40 nahezu vollständig eliminiert, wie aus dem rechten Teil der Fig. 2 unmittelbar ersichtlich ist.

Nach der Bildkorrektur 40 erfolgt vorzugsweise eine Segmentierung 41 des Bildes, wobei benachbarte Bildelemente, aus welchen sich das Bild zusammensetzt, zu inhaltlich zusammenhängenden Bereichen 32 bis 34 des Bildes zusammengefasst werden. Das Ergebnis der Segmentierung ist im unteren Teil der Fig. 2 beispielhaft anhand einer diagonalen Strebe 32, eines Teilabschnittes 33 eines vertikalen Rahmens sowie des Schutzgeländers 34 veranschaulicht, wobei die mittels Segmentierung erhaltenen Bereiche aller anderen Gerüstbauelemente aus Gründen der Übersichtlichkeit in der Fig. 2 nicht dargestellt sind.

Vorzugsweise werden bei der Segmentierung 41 des Bildes Algorithmen zur Erkennung von Kanten und/oder Objektübergängen im aufgenommenen und ggf. korrigierten Bild 31 verwendet, wodurch ein sogenanntes Kantenbild, in welchem nur noch die Kanten bzw. Objektübergänge gekennzeichnet sind, erhalten wird.

Die Zusammenfassung inhaltlich zusammenhängender Bereiche 32 bis 34 des Bildes kann vorzugsweise dadurch erleichtert werden, dass bei der Segmentierung 41 ein oder mehrere Modelle einzelner Gerüstbauelemente 11 bis 15 und/oder der zu einem Gerüst zusammengebauten Gruppe der Gerüstbauelemente 11 bis 15 berücksichtigt werden. Bei der Segmentierung wird dann nicht nur nach Kanten oder Objektübergängen gesucht, sondern auch die Form und/oder Dimension der jeweils zu erwartenden und zu identifizierenden Gerüstbauelementen 11 bis 15 bzw. berücksichtigt.

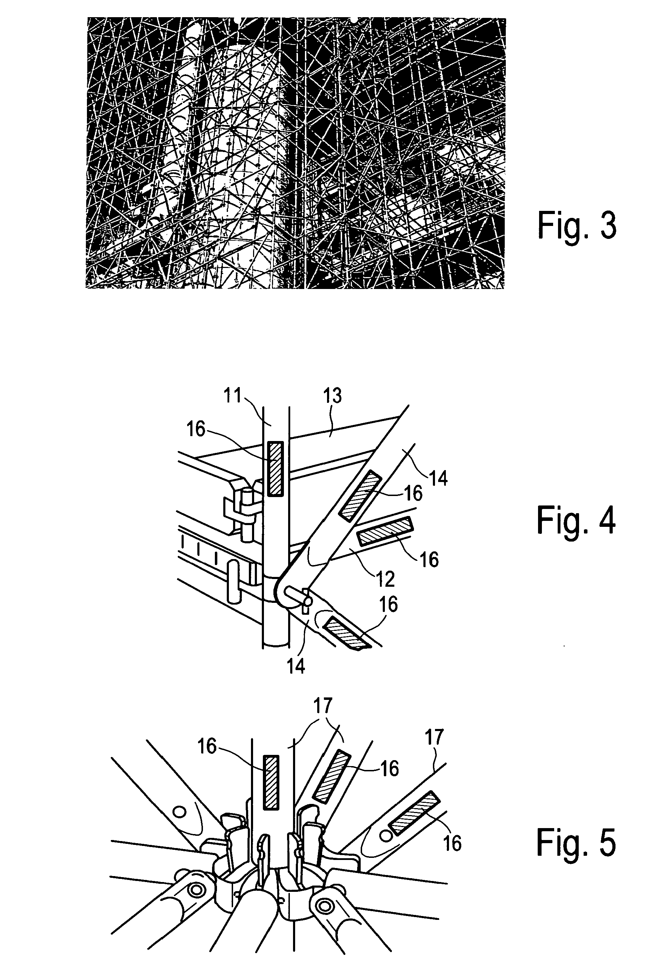

Zur besseren Veranschaulichung wurde die Erfindung bisher lediglich anhand des Beispiels eines einfachen Rahmengerüstes 10 näher erläutert. Selbstverständlich kann die erfindungsgemäße Vorrichtung sowie das entsprechende Verfahren insbesondere im Industriegerüstbau, beispielsweise bei Kraftwerken sowie in der Chemie oder Petrochemie, wegen der besonders hohen Komplexität der Gerüste in besonders vorteilhafter Weise eingesetzt werden. Fig. 3 zeigt ein Beispiel für ein z.B. in der Petrochemie eingesetztes sogenanntes Modulgerüst.

Fig. 4 zeigt einen Ausschnitt aus einem Rahmengerüst, in welchem einzelne Gerüstbauelemente miteinander verbunden sind. Neben einem vertikal verlaufenden Rohr des Vertikalrahmens 11 sind Abschnitte zweier diagonaler Streben 14 sowie des Horizontalrahmens 12 mit dem darauf befindlichen Boden 13 zu erkennen.

Im vorliegenden Beispiel sind der Vertikalrahmen 11, der Horizontalrahmen 12 sowie die diagonalen Streben 14 jeweils mit Elementen 16 versehen, welche das Erfassen von elektromagnetischer Strahlung, welche von dem Gerüst ausgeht, durch die Erfassungseinrichtung 20 (vgl. Fig. 1) unterstützen.

Die Elemente 16 sind vorzugsweise derart an den Gerüstbauelementen 11 bis 14 angebracht, dass sie von einer Seite des Gerüstes aus sichtbar sind.

Bei den Elementen 16 handelt es sich z.B. um reflektierende Elemente, insbesondere Aufkleber, welche elektromagnetische Strahlung, insbesondere sichtbares Licht und/oder Infrarot- und/oder Ultraviolettstrahlung, zumindest teilweise reflektieren, wodurch die vom Gerüst ausgehende Strahlung von der Erfassungseinrichtung 20 besonders zuverlässig detektiert werden kann.

Alternativ oder zusätzlich können die Elemente 16 phosphoreszierende Eigenschaften haben, aufgrund welcher diese - wie bei einem Uhrenziffernblatt - auch bei Dunkelheit Strahlung aussenden, welche von der Erfassungseinrichtung 20 effizient detektiert werden kann.

Alternativ oder zusätzlich können die Elemente 16 auch fluoreszierende Eigenschaften haben, wodurch diese bei Bestrahlung mit einer ersten elektromagnetischen Strahlung eine zweite elektromagnetische Strahlung aussenden, welche von der Erfassungseinrichtung 20 Effizienz zuverlässig erfasst werden kann.

Prinzipiell ist es auch möglich, die Elemente 16 als sogenannte RFID-Elemente (Radiofrequenz-Identifikations-Elemente) auszugestalten, welche eine Identifizierung und Lokalisierung der Gerüstbauelemente 11 bis 14 mit Hilfe elektromagnetischer Wellen erlauben. Die RFID-Elemente weisen einen mit einer Antenne versehenen Chip auf, der mittels Radiostrahlung ausgelesen werden kann. Die Erfassungseinrichtung 20 erfasst bei dieser Ausführung ggf. nur die im jeweiligen RFID-Element gespeicherte Information, beispielsweise zur Art des Gerüstbauelements 11 bis 14, wodurch nicht unbedingt ein ganzes Bild im Sinne eines ortsaufgelösten Abbilds des Gerüstes aufgenommen werden muss, um die für die Ableitung bestimmter Eigenschaften, wie z.B. die Anzahl und Art der verwendeten Gerüstbauelemente 11 bis 14, erforderlichen Informationen zu erhalten. Diese Variante stellt eine besonders zuverlässige Erfassung der Gerüstbauelemente 11 bis 15 eines Gerüstes 10 dar.

Fig. 5 zeigt einen sogenannten Knotenpunkt eines Modulgerüstes, in welchem mehrere Streben 17 des Gerüstes, von denen beispielhaft nur zwei mit einem Bezugszeichen beschriftet sind, aufeinander treffen und mit einander verbunden sind. Auch in diesem Beispiel sind an den Streben 17 Elemente 16 vorgesehen, welche die Erfassung der Streben 17 durch die Erfassungseinrichtung 20 ermöglichen oder zumindest unterstützen. Im Übrigen gelten die obigen Ausführungen im Zusammenhang mit dem in Fig. 4 beschriebenen Beispiel entsprechend.

## Patentansprüche

1. Vorrichtung zur Untersuchung einer vorhandenen Gruppe von, insbesondere zu einem Gerüst (10) miteinander verbundenen, Gerüstbauelementen (11 - 15),
**gekennzeichnet durch**
mindestens eine Erfassungseinrichtung (20 - 23) zur Erfassung der Gruppe der Gerüstbauelemente (11 - 15) und
eine Verarbeitungseinrichtung (30) zur zumindest teilweise automatisierten Ermittlung von zumindest einer Eigenschaft (32) der Gruppe der Gerüstbauelemente (11 - 15), insbesondere einer Anzahl und/oder Anordnung von Gerüstbauelementen (11 - 15), aus der erfassten Gruppe der Gerüstbauelemente (11 - 15).

2. Vorrichtung nach Anspruch 1, wobei die Erfassungseinrichtung (20 - 23) zur Aufnahme zumindest eines, insbesondere digitalen, Bildes (31) der Gruppe der Gerüstbauelemente (11 - 15) ausgebildet ist und die Verarbeitungseinrichtung (30) zur Ermittlung der zumindest einen Eigenschaft (32) der Gruppe der Gerüstbauelemente (11 - 15) aus dem mindestens einen erfassten Bild (31) ausgebildet ist.

3. Vorrichtung nach Anspruch 2, wobei die Erfassungseinrichtung (20 - 23) zur Aufnahme von mehreren Bildern (31) der Gruppe der Gerüstbauelemente aus unterschiedlichen Positionen (P0 - P3) und/oder in unterschiedlichen Perspektiven (R0 - R4) und/oder zu unterschiedlichen Zeitpunkten (t1 - t3) ausgebildet ist.

4. Vorrichtung nach Anspruch 2 oder 3, wobei die Erfassungseinrichtung (20 - 23) zur Aufnahme einer Sequenz von mehreren Bildern der Gruppe der Gerüstbauelemente ausgebildet ist.

5. Vorrichtung nach einem der vorangehenden Ansprüche, wobei die Erfassungseinrichtung (20 - 23) zur Erfassung der Gruppe der Gerüstbauelemente mittels elektromagnetischer Wellen, insbesondere sichtbarem Licht, Ultraviolett-, Infrarot-, Terahertz- oder Mikrowellenstrahlung, und/oder akustischer Wellen, insbesondere Ultraschall, ausgebildet ist.

6. Vorrichtung nach einem der vorangehenden Ansprüche, wobei die Erfassungseinrichtung (20 - 23) zur Erfassung der Gruppe der Gerüstbauelemente durch Abtasten des Gerüstes mit einem Lichtstrahl, insbesondere einem Laserstrahl, ausgebildet ist.

7. Vorrichtung nach einem der vorangehenden Ansprüche, wobei die Verarbeitungseinrichtung (30) zur Ermittlung aerodynamischer und/oder mechanischer, insbesondere statischer und/oder dynamischer, Eigenschaften der Gruppe der Gerüstbauelemente aus der erfassten Gruppe der Gerüstbauelemente ausgebildet ist.

8. Vorrichtung nach einem der vorangehenden Ansprüche, wobei die Verarbeitungseinrichtung (30) derart ausgebildet ist, dass zumindest eine aus der erfassten Gruppe der Gerüstbauelemente ermittelte Eigenschaft (32) mit vorgegebenen Informationen (33), welche insbesondere einer Inventarliste entnommen werden, verglichen wird und/oder in eine Datenbank und/oder ein Dokument, insbesondere in eine Inventarliste, eingetragen wird.

9. Vorrichtung nach einem der Ansprüche 2 bis 8, wobei die Verarbeitungseinrichtung (30) derart ausgebildet ist, dass das aufgenommene Bild einer Bildverarbeitung unterzogen wird, bevor daraus eine Eigenschaft der Gruppe der Gerüstbauelemente abgeleitet wird.

10. Vorrichtung nach Anspruch 9, wobei die Verarbeitungseinrichtung (30) zu einer Bildkorrektur (40) des aufgenommenen Bildes (31) ausgebildet ist, bei welcher Bildverzerrungen, insbesondere stürzende Linien, und/oder Schatteneffekte eliminiert oder zumindest reduziert werden.

11. Vorrichtung nach Anspruch 9 oder 10, wobei das aufgenommene Bild (31) aus einer Vielzahl von Bildelementen zusammengesetzt ist und die Verarbeitungseinrichtung (30) zu einer Segmentierung (41) des aufgenommenen Bildes (31) ausgebildet ist, bei welcher benachbarte Bildelemente zu inhaltlich zusammenhängenden Bereichen (32 - 34) des Bildes (31) zusammengefasst werden.

12. Vorrichtung nach Anspruch 11, wobei die Verarbeitungseinrichtung (30) derart ausgebildet ist, dass bei der Segmentierung (41) Kanten oder Objektübergänge im aufgenommenen Bild (31) erkannt werden und ein Kantenbild, in welchem die Kanten bzw. Objektübergänge gekennzeichnet sind, erzeugt wird.

13. Vorrichtung nach einem der vorangehenden Ansprüche, welche derart ausgebildet ist, dass bei der Ermittlung von zumindest einer Eigenschaft (32) der Gruppe der Gerüstbauelemente (11 - 15) ein Modell einzelner Gerüstbauelemente (11 - 15) und/oder der Gruppe der Gerüstbauelemente (11 - 15), insbesondere des Gerüstes (10), berücksichtigt wird.

14. System zur Untersuchung einer Gruppe von, insbesondere zu einem Gerüst (10) miteinander verbundenen, Gerüstbauelementen (11 - 15),
**gekennzeichnet durch**
eine Vorrichtung nach mindestens einem der vorangehenden Ansprüche und
an zumindest einem Teil der Gerüstbauelemente (11 - 15) angebrachten Elementen (16), insbesondere elektromagnetische Strahlung reflektierenden und/oder emittierenden Elementen, insbesondere RFID-Elementen, mit Hilfe welcher die Gruppe der Gerüstbauelemente (11 - 15) von der Erfassungseinrichtung (20 - 23) erfasst oder deren Erfassung zumindest unterstützt werden kann.

15. Verfahren zur Untersuchung einer vorhandenen Gruppe von, insbesondere zu einem Gerüst (10) miteinander verbundenen, Gerüstbauelementen (11 - 15),
**dadurch gekennzeichnet, dass**
die Gruppe der Gerüstbauelemente (11 - 15) erfasst und daraus zumindest eine Eigenschaft der Gruppe der Gerüstbauelemente (11 - 15), insbesondere die Anzahl und/oder Anordnung der Gerüstbauelemente (11 - 15), zumindest teilweise automatisiert ermittelt wird.
